(19) Europäisches Patentamt

European Patent Office

Office européen des brevets

(11) **EP 1 026 816 A2**

(12) **EUROPÄISCHE PATENTANMELDUNG**

(43) Veröffentlichungstag:
09.08.2000 Patentblatt 2000/32

(51) Int. Cl.⁷: **H02M 7/48**

(21) Anmeldenummer: **00102647.5**

(22) Anmeldetag: **08.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.02.1999 DE 19905003**

(71) Anmelder: **Wagner K.G.**
**87751 Heimertingen (DE)**

(72) Erfinder:
**Hörmann,Markus,Dipl.-Ing.(FH)**
**87463 Dietmannsried (DE)**

(74) Vertreter:
**Pfister, Helmut, Dipl.-Ing.**
**Pfister & Pfister,**
**Patentanwälte,**
**Herrenstrasse 11**
**87700 Memmingen (DE)**

(54) **Umpolsteuerger-t**

(57)     Die Erfindung betrifft ein Umpolsteuergerät für die Ansteuerung einer induktiven Last oder eines Magneten mit einer Spannungsquelle sowie einer mit der Spannungsquelle verbundenen Polwendeschaltung, deren Ausgang mit der Last in Verbindung steht und die über eine elektronische Steuerung schaltbar ist.

Gemäß der Erfindung wird vorgeschlagen, daß vor der Polwendeschaltung ein Energiespeicher, insbesondere wenigstens eine Kapazität, geschaltet ist, welcher insbesondere beim Abschalten der induktiven Last eine Gegenspannung an diese anzulegen vermag.

FIG.1

**Beschreibung**

Die Erfindung betrifft ein Umpolsteuergerät für die Ansteuerung einer induktiven Last mit einer Spannungsquelle sowie einer mit der Spannungsquelle verbundenen Polwendeschaltung, deren Ausgang mit der Last in Verbindung steht und die über eine elektronische Steuerung schaltbar ist. Insbesondere betrifft die Erfindung die Ansteuerung eines Magneten, so daß im folgenden überwiegend von einem Magneten die Rede ist, ohne daß damit eine Beschränkung verbunden sein soll.

Elektromagnete finden in der Technik vielfältige Anwendung. Es existieren für die verschiedenen Anwendungsfälle die unterschiedlichsten Magnettypen mit unterschiedlichen magnetischen Eigenschaften. Es ist daher notwendig, die erzeugten magnetischen Kräfte eines Elektromagneten beeinflussen und steuern zu können. Werkzeugmaschinen werden teilweise mit magnetischen Spannvorrichtungen ausgerüstet, bei denen das zu bearbeitende Werkstück mittels der erzeugten Magnetkraft gehalten wird. Hier besteht ein Problem darin, daß magnetisierbare Werkstücke auch nach dem Abschalten des Haltemagneten häufig magnetisch bleiben und nicht ohne weiteres von der Spannvorrichtung entfernt werden können. Die Entmagnetisierung erfolgt erst nach einer längeren Zeitdauer. Es ist jedoch erwünscht, das Werkstück möglichst schnell nach der Bearbeitung von der Maschine zu entfernen, um die Rüstzeiten zu minimieren.

Es sind daher Umpolsteuergeräte bekannt, mit denen ein an das Magnetisier- und Entmagnetisierverhalten des Magneten angepaßter Strom erzeugt werden kann, um das Abschalten des Magneten bis zur vollständigen Entmagnetisierung sowohl des Magneten als auch des Werkstückes in kurzer Zeit zu ermöglichen. Diese Umpolsteuergeräte weisen in der Regel eine Gleichrichterschaltung und eine Polwendeschaltung auf, die über eine elektronische Steuerung entsprechend geschaltet wird, um den gewünschten alternierenden Strom-Zeitverlauf zu erzeugen.

Es ist bekannt, daß die Gleichrichterschaltung eine Thyristorschaltung und die Polwendeschaltung ein Polwenderelais ist. Dies hat zum einen den Nachteil, daß die mechanischen Kontakte des Relais beim Schalten der häufig sehr großen Induktivitäten sehr schnell verschleißen. Auch ist es bekannt, die Gleichrichterschaltung als Gleichrichterbrücke und die Polwendeschaltung als Transistorschaltung auszubilden. Hier entsteht häufig ein nicht zu vernachlässigender überlagerter Wechselstrom am Verbraucher. Mit den bekannten Anordnungen ist das Einschalt- bzw. Ausschaltverhalten der induktiven Last nicht beeinflußbar.

Der Erfindung liegt die Aufgabe zugrunde, ein verbessertes Umpolsteuergerät zu schaffen, mit der eine optimierte Ansteuerung, insbesondere ein schnelleres Abschaltverhalten der induktiven Last möglich ist.

Die Aufgabe wird gemäß der Erfindung dadurch gelöst, daß vor der Polwendeschaltung ein Energiespeicher, insbesondere wenigstens eine Kapazität, geschaltet ist, welcher insbesondere beim Abschalten der induktiven Last eine Gegenspannung an diese anzulegen vermag. Die Kapazität kann dabei als Kondensator beliebiger Bauart, beispielsweise als Elektrolytkondensator ausgebildet und parallel zur Spannungsquelle im Gleichstromzwischenkreis geschaltet sein. Grundsätzlich sind aber auch andere Energiespeicherschaltungen möglich. Das Vorsehen eines eine Gegenspannung erzeugenden Energiespeichers hat den Vorteil, daß der Strom beim Abschalten wesentlich schneller auf den Wert Null gebracht werden kann. Dadurch erhöht sich die Dynamik der Schaltung, und es werden weitere Möglichkeiten zur Optimierung der Ansteuerung eines Magneten geschaffen.

Mit der Vorrichtung gemäß der Erfindung ist ein Pulsweitenmodulationsverfahren realisierbar werden. Es ist dazu unter anderem erforderlich, daß die Taktfrequenz der Polwendeschaltung relativ hoch gewählt wird. Dies kann zu unerwünschten Oberschwingungen führen, die auf die induktive Last, beispielsweise den Magneten, übertragen werden können. Es ist daher gemäß der Erfindung vorgesehen, daß ein Tiefpaß am Ausgang der Polwendeschaltung geschaltet ist. Besonders günstig ist es hierbei, wenn ein Tiefpaß höherer Ordnung, insbesondere zweiter Ordnung vorgesehen ist. Durch diese Maßnahmen werden hohe Frequenzen am Ausgang des Gerätes gesperrt. Die Übertragung von Oberschwingungen an die induktive Last können somit verhindert oder zumindest weitestgehend reduziert werden.

Durch die Verwendung eines Pulsweitenmodulationsverfahren besteht die Möglichkeit im Prinzip jede beliebige Signalform zu erzeugen und auf die induktive Last zu legen, z.B. um diese zu entmagnetisieren. Günstigerweise wird diese Gegenspannung zum Zeitpunkt des Ausschaltens der Last auf diese eingeprägt.

Gemäß einer weitergehenden Ausführungsform der Erfindung ist vor der Polwendeschaltung eine Überlastsicherungsschaltung vorgesehen, die einen Lastwiderstand und einen Schalter aufweist, der über die elektronische Steuerung schaltbar ist. Dies hat den Vorteil, daß beim Schalten von großen Induktivitäten, beispielsweise von Hebemagneten, der auftretende Spannungsanstieg beschränkt werden kann. Eine Zerstörung der Elektronik ist daher nicht zu befürchten. Es ist von Vorteil, wenn der Schalter ein Transistor ist, der durch die elektronische Steuerung leicht schaltbar ist.

Der Energiespeicher kann von der Spannungsquelle gespeist werden. Die Spannungsquelle kann dabei grundsätzlich an jede beliebige Netzspannung anschließbar sein, und es ist vorgesehen, daß die Netzspannung eine Gleichspannung oder eine Wechselspannung liefert. Es kann vorgesehen werden, daß die Spannungsquelle über einen Gleichrichter an die Netzspannung anschließbar ist, und sich nach dem Gleichrichter ein Gleichstromzwischenkreis befindet. In diesem Gleichstromzwischenkreis sind vorzugsweise der Energiespeicher und je nach Ausführung auch die Überlastsicherungsschaltung geschaltet.

Es ist gemäß einer weitergehenden Ausführungsform der Erfindung vorgesehen, daß die elektronische Steuerung Mittel zur Spannungsüberwachung der Spannung der Spannungsquelle und/oder der Spannung des Ausgangs und/oder der Spannung im Gleichstromzwischenkreis aufweist. Dadurch kann die Ansteuerung und der Abschaltvorgang überwacht und gesteuert werden. Auch ist es möglich, Fehlfunktionen oder Spannungsspitzen zu erkennen, um z.B. die Überlastsicherungschaltung zu aktivieren. Mit einem Hallsensor ist auch ein Mittel zum Messen des Stromes zur induktiven Last bekannt, und es ist möglich hierdurch die Stromaufnahme des Magneten zu messen und zu überwachen. Durch diese Überwachung kann das Durchbrennen des Magneten frühzeitig erkannt werden und, zum Beispiel bei einem drohenden Kurzschluß das Gerät rechtzeitig, bevor dieses zerstört oder beschädigt wird, abgeschalten werden. Als Stromüberwachungsmittel sind auch andere, bekannte Vorrichtungen einsetzbar. Die genannten Überwachungsmittel sind entweder je einzeln oder in Kombination einsetzbar.

Es kann zudem vorgesehen werden, daß die elektronische Steuerung über einen getakteten DC/DC Spannungswandler von dem Gleichstromzwischenkreis mit Energie versorgt wird. Günstig ist es weiterhin, wenn die elektronische Steuerung über den Energiespeicher mit Energie versorgt wird. Dies hat den Vorteil, daß auch bei einem Ausfall der Netzspannung eine kontrollierte Steuerung des Stromes der induktiven Last möglich ist. Während dieser Zeit kann die elektronische Steuerung von dem Energiespeicher mit Energie versorgt werden. Eine Zerstörung des Gerätes aufgrund eines Netzspannungsausfalls, wie es bei herkömmlichen Geräten teilweise zu befürchten ist, wird damit vermieden.

Es ist vorgesehen, daß der Gleichrichter als eine Brückenschaltung aufgebaut ist. Alternativ ist auch vorgesehen, daß der Gleichrichter als eine Thyristorschaltung aufgebaut ist. Ferner ist es günstig, wenn die Polwendeschaltung als eine Transistorschaltung aufgebaut ist. Dies hat den Vorteil, daß auf mechanische Kontakte, wie bei einem Umpolrelais, verzichtet werden kann.

In einer erfindungsgemäßen Ausgestaltung ist vorgesehen, daß die elektronische Steuerung die Transistoren der Polwendeschaltung mit einer Taktfrequenz von 10 - 18 kHz, insbesondere 15 - 16 kHz, schaltet, um eine Ausgangsspannung mit einer Frequenz von 0 bis 500 Hz zu erzeugen. Mit der Vorrichtung gemäß der Erfindung ist es möglich, ein Verfahren durchzuführen, bei welchem beim Abschalten eine Gegenspannung an die induktive Last angelegt wird, die der zuerst angelegten Spannung entgegengerichtet ist. Es kann dabei ein Pulsweitenmodulationsverfahren realisiert werden, und es ist möglich, daß die elektronische Steuerung die Transistoren der Polwendeschaltung entsprechend der optimierten Magnetisier- und Entmagnetisierkurve des Magneten schaltet. Dies hat den Vorteil, daß die Dauer des Entmagnetisiervorgangs auf ein Minimum reduziert werden kann. So können die Rüstzeiten bei Maschinen mit magnetischer Spannvorrichtung wesentlich erniedrigt werden. Dennoch bleibt die Handhabung sehr einfach.

Vorstehend wurde die Erfindung anhand einer Kombination des Energiespeichers mit einem Tiefpaß und/oder einer Überlastsicherungsschaltung beschrieben. Grundsätzlich ist es aber auch möglich, ein Umpolsteuergerät vorzusehen, in der nur eine Überlastsicherung und/oder ein Energiespeicher vorhanden ist.

Die Erfindung wird im folgenden anhand der schematischen Zeichnung näher erläutert. Es zeigen:

Fig. 1 eine Schaltung für ein Umpolsteuergerät gemäß der Erfindung,

Fig. 2 ein Ersatzschaltbild für eine Schaltung mit induktiver Last und einem Energiespeicher,

Fig. 3 ein Strom-Zeit-Diagramm eines Abschaltvorgangs ohne Energiespeicher,

Fig. 4 ein Strom-Zeit-Diagramm eines Abschaltvorgangs mit Energiespeicher speicher und

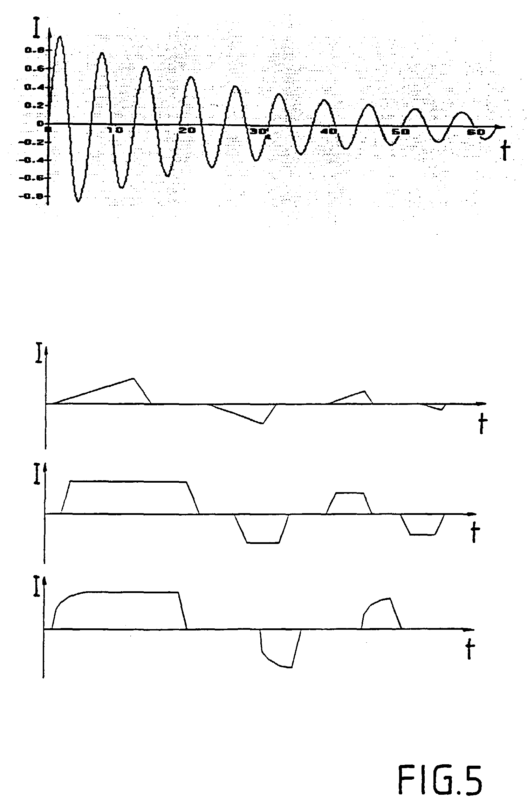

Fig. 5 Strom-Zeit-Diagramme von Stromverläufen, die mit der Schaltung gemäß der Erfindung erzeugbar sind.

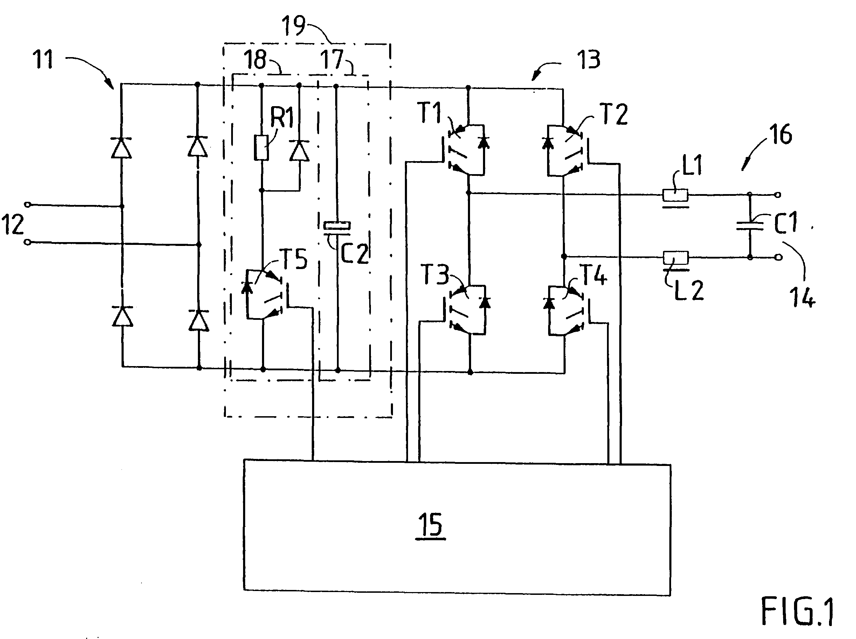

Die in der Fig. 1 gezeigte Schaltung für ein Umpolsteuergerät weist einen Gleichrichter 11 mit einer Brückenschaltung auf, der mit einer Spannungsquelle 12 verbindbar ist. Die Spannungsquelle ist als Energieversorgung zu verstehen, die an ein Wechselspannungsnetz oder aber auch an ein Gleichspannungsnetz angeschlossen werden kann. Es ist eine Polwendeschaltung 13 vorgesehen, die einerseits mit der Gleichspannungsseite des Gleichrichters 11 verbunden ist.

Andererseits steht der Ausgang 14 der Polwendeschaltung 13 mit der anzusteuernden induktiven Last, beispielsweise einem Magneten, in Verbindung.

Das Umpolsteuergerät weist eine zentrale elektronische Steuerung 15 auf, mit der die Polwendeschaltung 13 angesteuert wird. Im einzelnen besteht die Polwendeschaltung 13 aus vier Transistoren T1 bis T4, die über die Steuerung 15 schaltbar sind, um den gewünschten Stromverlauf über die Zeit beim Entmagnetisiervorgang einzustellen. Die Schaltung entspricht insoweit einem transistorgesteuerten Umpolsteuergerät.

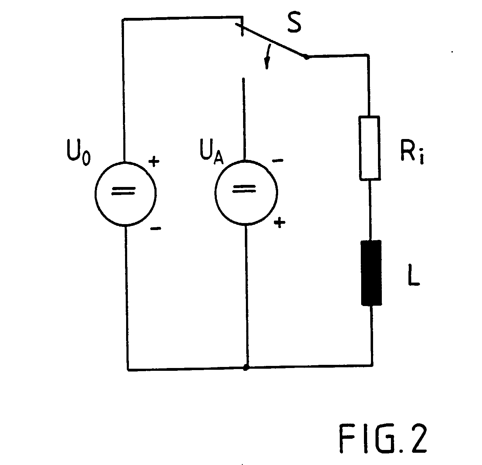

Weiterhin ist, ausgehend von der Spannungsquelle 12, vor der Polwendeschaltung 13 ein Energiespeicher 17 parallel geschaltet. Dieser kann beispielsweise als Elektrolytkondensator C2 mit ausreichender Kapazität ausgebildet sein. Hierdurch kann ein günstiger Strom-Zeitverlauf beim Abschalten erreicht werden, da beim Abschalten an die induktive Last eine Gegenspannung angelegt wird. Die Wirkung dieses Energiespeichers und der erzeugten Gegenspannung wird anhand des in Fig. 2 gezeigten Ersatzschaltbilds erläutert, in dem der Energiespeicher 17 als Gegenspannung $U_A$ dargestellt ist. Durch Umlegen des Schalters S wird die Speisespannungsversorgung $U_0$ zum Abschalten unterbrochen. Es gilt folgendes Berechnungsmodel:

$$i(t) = U_A/R_i + [(U_0 - U_A)/R_i].exp(-R_i/L)t$$

Die Innenwiderstände sind in $R_i$ zusammengefaßt. Es wurden folgende Werte angenommen:

$U_N$ = 150 V

$I_N$ = 1,1 A

$L_N$ = 21,5 H

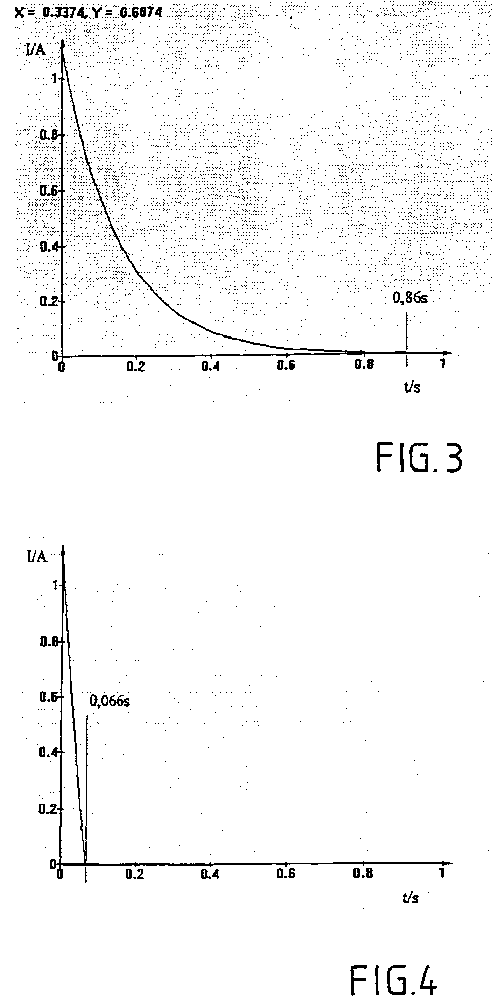

Fig. 3 zeigt ein Strom-Zeit-Diagramm, wie es beim Abschalten ohne den Enegiespeicher 17 ($U_A$ = 0) auftritt. Der Verlauf entspricht einer langsam ausklingenden e-Funktion. Fig. 4 zeigt einen Abschaltvorgang, wie er mit dem Energiespeicher 17 ($U_A$ = -280 V) erreicht wird. Es ist offensichtlich, daß der Strom nach dem Abschalten in einer wesentlich kürzeren Zeit auf Null gebracht werden kann. Dadurch wird die Dynamik des Umpolsteuergerätes wesentlich, bei dem gezeigten Ausführungsbeispiel um den Faktor 13, erhöht. Dies wird günstigerweise zum Steuern von schnellen Abschaltvorgängen ausgenutzt werden.

Am Ausgang 14 der Polwendeschaltung 13 ist ein Tiefpaß 16 zweiter Ordnung vorgesehen. Im einzelnen ist die Anordnung so getroffen, daß jeder Pol des Ausgangs 14 eine Induktivität L1, L2 aufweist und daß wenigstens eine Kapazität C1 parallel geschaltet ist. Hierdurch wird bewirkt, daß nur die Grundwelle, oder die Schwingungen bis zur Grenzfrequenz des Filters zum Verbraucher durchgelassen wird. Eine Überlagerung von Oberschwingungen an den Verbraucher kann damit wirksam verhindert werden. Grundsätzlich ist es hierbei möglich, einen Tiefpaß erster oder auch höherer Ordnung vorzusehen.

Es ist ferner eine Überlastsicherungsschaltung 18 zwischen der Spannungsquelle 12 und der Polwendeschaltung 13 vorgesehen, die einen Lastwiderstand R1 und einen Transistor T5 aufweist, der ebenfalls über die zentrale elektronische Steuerung 15 schaltbar ist. Der Transistor T5 dient zum Verhindern einer Überlastung der Bauelemente, wenn der Spannungsanstieg, insbesondere beim Schalten von großen Induktivitäten, wie Hebemagneten, zu groß wird. Der Transistor T5 wird über die zentrale Steuerung 15 geschaltet, und die überschüssige Energie kann über den Widerstand R1 abgeleitet und in Wärme umgesetzt werden. Dieser Transistor T5 wirkt im wesentlichen wie ein Choppertransistor und kann in einfacher Weise von der elektronischen Steuerung 15 angesteuert werden.

Vorstehend ist die Schaltung des Umpolsteuergerätes mit einem Gleichrichter erläutert worden. Es wird daher ein Gleichstromzwischenkreis 19 zwischen der Spannungsquelle 12 und der Polwendeschaltung gebildet. In diesem Gleichstromzwischenkreis 19 sind bei dem in der Zeichnung dargestellten Ausführungsbeispiel auch der Energiespeicher 17 und die Überlastsicherung 18 geschaltet. Es ist aber grundsätzlich möglich, die Spannungsquelle an ein Gleichspannungsnetz anzuschließen, so daß der Gleichrichter entfallen kann. Der Gleichstromzwischenkreis ist dann nicht mehr vorhanden.

Die elektronische Steuerung 15 kann nicht dargestellte Einrichtungen zum Messen der Eingangsspannung, der Ausgangsspannung und der Spannung im Gleichstromzwischenkreis 19 aufweisen. Diese Einrichtungen könne hochohmige Widerstände aufweisen, so daß zudem nahezu eine galvanische Trennung zwischen Auswertekreis und Meßkreis bewirkt werden kann. Die Messung der Spannung im Gleichstromzwischenkreis dient unter anderem zur Ansteuerung des Transistors T5, mit dem Überlastungen der Elektronik verhindert werden können. Es kann zudem vorgesehen werden, daß die Steuerung zumindest bei einem Netzspannungsausfall von dem Energiespeicher mit Energie versorgt wird. Dadurch können Beschädigungen des Umpolsteuergerätes bei Netzausfall vermieden werden.

Mit einer solchen Schaltung können beliebige Strom-Zeit-Verläufe am Ausgang 14 erzeugt werden. Die elektronische Steuerung 15 erlaubt dabei ein Ansteuern der Transistoren T1 - T4 mit einer Taktfrequenz von 15 - 16 kHz. Dadurch kann eine Ausgangsspannung mit einer Frequenz von 0 bis 500 Hz erzeugt werden. Es ist offensichtlich, daß zusammen mit der erhöhten Dynamik des Systems eine Vielzahl von unterschiedlichen Stromverläufen erzeugbar ist, wozu zum Beispiel ein Pulsweitenmodulationsverfahren eingesetzt wird. Insbesondere ist es möglich, auf das magnetische Material optimierte Magnetisier- und Entmagnetisiervorgänge zusammenzustellen und zu erzeugen. In Fig. 4 sind beispielhaft einige Strom-Zeit-Verläufe schematisch dargestellt, die mit der Schaltung gemäß Fig. 1 generiert werden können.

Aufgrund des Einsatzes eines Pulsweitenmodulationsverfahrens ist es möglich, daß durch das erfindungsgemäße Verfahren bzw. Gerät im Prinzip jede beliebige Signalform erzeugbar ist.

Es ist dabei auch vorgesehen, daß die elektronische Steuerung 15 als z.B. programmierbare, microprozessorgesteuerte Schaltung ausgebildet ist und dadurch eine hohe Variabilität und Flexibilität erreichbar ist.

Es ist auch vorgesehen, daß die einzelnen Baugruppen, z.B. die Polwendeschaltung 13, die electronische Steuerung 13 und/oder der Gleichstromzwischenkreis 19 als separates Bauteil ausgebildet ist, und dieser modulare Aufbau auf untereinander definierten Schnittstellen eine beilebige Zusammensetzbarkeit, - insbesondere von unterschiedlichen Leistungs- oder Funktionsstufen - erlaubt, und so das Gerät beliebigen Ansprüchen problemlos anpaßbar ist.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

**Patentansprüche**

1. Umpolsteuergerät für die Ansteuerung einer induktiven Last, wie zum Beispiels eines Magneten, mit einer Spannungsquelle sowie einer mit der Spannungsquelle verbundenen Polwendeschaltung (13), deren Ausgang (14) mit der Last in Verbindung steht und die über eine elektronische Steuerung (15) schaltbar ist, **dadurch gekennzeichnet, daß** vor der Polwendeschaltung (13) ein Energiespeicher (17), insbesondere wenigstens eine Kapazität (C2), geschaltet ist, welcher insbesondere beim Abschalten der induktiven Last eine Gegenspannung an diese anzulegen vermag.

2. Umpolsteuergerät nach Anspruch 1, **dadurch gekennzeichnet, daß** ein Tiefpaß (16) am Ausgang der Polwendeschaltung (13) geschaltet ist.

3. Umpolsteuergerät nach Anspruch 1 oder 2, **dadurch gekennzeichnet, daß** vor der Polwendeschaltung (13) eine Überlastsicherungsschaltung (18) vorgesehen ist, die einen Lastwiderstand (R1) und einen Schalter (T5) aufweist, der über die elektronische Steuerung (15) schaltbar ist.

4. Umpolsteuergerät nach einem oder mehreren der vorhergehenden Ansprüche, **dadurch gekennzeichnet, daß** die Spannungsquelle über einen Gleichrichter (11) an die Netzspannung (12) anschließbar ist und sich nach dem Gleichrichter (11) ein Gleichstromzwischenkreis (19) anschließt.

5. Umpolsteuergerät nach einem oder mehreren der vorhergehenden Ansprüche, **dadurch gekennzeichnet, daß** der Energiespeicher (17) von der Spannungsquelle gespeist wird.

6. Umpolsteuergerät nach einem oder mehreren der vorhergehenden Ansprüche, **dadurch gekennzeichnet, daß** der Schalter ein Transistor (T5) ist.

7. Umpolsteuergerät nach einem oder mehreren der vorhergehenden Ansprüche, **dadurch gekennzeichnet, daß** der Tiefpaß (16) höherer Ordnung, insbesondere zweiter Ordnung ist.

8. Umpolsteuergerät nach einem oder mehreren der vorhergehenden Ansprüche, **dadurch gekennzeichnet, daß** der Gleichrichter (11) als eine Brückenschaltung, oder als eine Thyristorschaltung aufgebaut ist.

9. Umpolsteuergerät nach einem oder mehreren der vorhergehenden Ansprüche, **dadurch gekennzeichnet, daß** die Netzspannung eine Gleichspannungs- oder Wechselspannungsquelle ist.

10. Umpolsteuergerät nach einem oder mehreren der vorhergehenden Ansprüche, **dadurch gekennzeichnet, daß** die Polwendeschaltung (13) als eine Transistorschaltung (T1, T2, T3, T4) aufgebaut ist.

11. Umpolsteuergerät nach einem oder mehreren der vorhergehenden Ansprüche, **dadurch gekennzeichnet, daß** die elektronische Steuerung (15), welche insbesondere microprozessorgesteuert ausgebildet ist, Mittel zur Spannungsüberwachung der Spannung der Spannungsquelle (12) und/oder der Spannung des Ausgangs (14) und/oder der Spannung im Gleichstromzwischenkreis (19) und/oder Mittel zur Überwachung des Stromes, welcher von der induktiven Last aufgenommen wird und/oder daß die elektronische Steuerung (15) über einen getakteten DC/DC Spannungswandler von dem Gleichstromzwischenkreis (19) mit Energie versorgt wird und/oder die Steuerung (15) von dem Energiespeicher (17) versorgt wird.

12. Umpolsteuergerät nach einem oder mehreren der vorhergehenden Ansprüche, **dadurch gekennzeichnet, daß** die elektronische Steuerung (15) die Transistoren (T1, T2, T4, T5) der Polwendeschaltung (13) mit einer Taktfrequenz von 10 - 18 kHz, insbesondere 15 - 16 kHz, schaltet, um eine Ausgangsspannung mit einer Frequenz von 0 bis 500 Hz zu erzeugen.

**13.** Umpolsteuergerät nach einem oder mehreren der vorhergehenden Ansprüche, **dadurch gekennzeichnet, daß** die elektronische Steuerung (15) die Transistoren (T1, T2, T4, T5) der Polwendeschaltung (13) entsprechend der optimierten Magnetisier- und Entmagnetisierkurve des Magneten schaltet.

**14.** Verfahren für das Entmagnetisieren einer induktiven Last, wobei beim Abschalten an die induktive Last eine Gegenspannung angelegt wird, die der zuerst angelegten Spannung entgegengerichtet ist.

**15.** Verfahren für das Entmagnetisieren einer induktiven Last, insbesondere nach Anspruch 14, **dadurch gekennzeichnet, daß** ein Pulsweitenmodulationsverfahren eingesetzt wird.

FIG.1

EP 1 026 816 A2

FIG.2

X = 0.3374, Y = 0.6874

I/A

1

0.8

0.6

0.4

0.2

0

0,86s

0    0.2    0.4    0.6    0.8    1

t/s

FIG.3

I/A

1

0.8

0.6

0.4

0.2

0

0,066s

0    0.2    0.4    0.6    0.8    1

t/s

FIG.4

9

FIG.5